# FASCICULE DE BREVET EUROPEEN

(11) **EP 2 147 815 B1**
(45) Date de publication et mention de la délivrance du brevet: **29.12.2010**
(21) Numéro de dépôt: 09163972.4
(22) Date de dépôt: 29.06.2009
(51) Int. Cl.: B60K 13/04, F01N 13/18

(54) **Support d'échappement de véhicule notamment automobile et véhicule équipé d'un tel support**
Halterung für das Auspuffsystem eines Fahrzeugs, insbesondere eines Kraftfahrzeugs und mit einer solchen Halterung ausgestattetes Fahrzeug
Support for the exhaust of a vehicle, in particular an automobile, and vehicle equipped with such a support

(30) Priorité: 22.07.2008 FR 0854971
(43) Date de publication de la demande: 27.01.2010
(73) Titulaire: Peugeot Citroën Automobiles Société Anonyme, 78140 Velizy Villacoublay (FR)
(72) Inventeur: Leroux, Stéphane, 92100, Boulogne Billancourt (FR)
(74) Mandataire: Allain, Laurent

(56) Documents cités:
- EP-B- 1 004 372
- DE-A-102006 018 439
- DE-U-202007 009 071
- FR-A- 2 853 949
- FR-A- 2 870 790

## Description

La présente invention concerne un support d'échappement de véhicule notamment automobile, ainsi qu'un véhicule équipé d'un tel support.

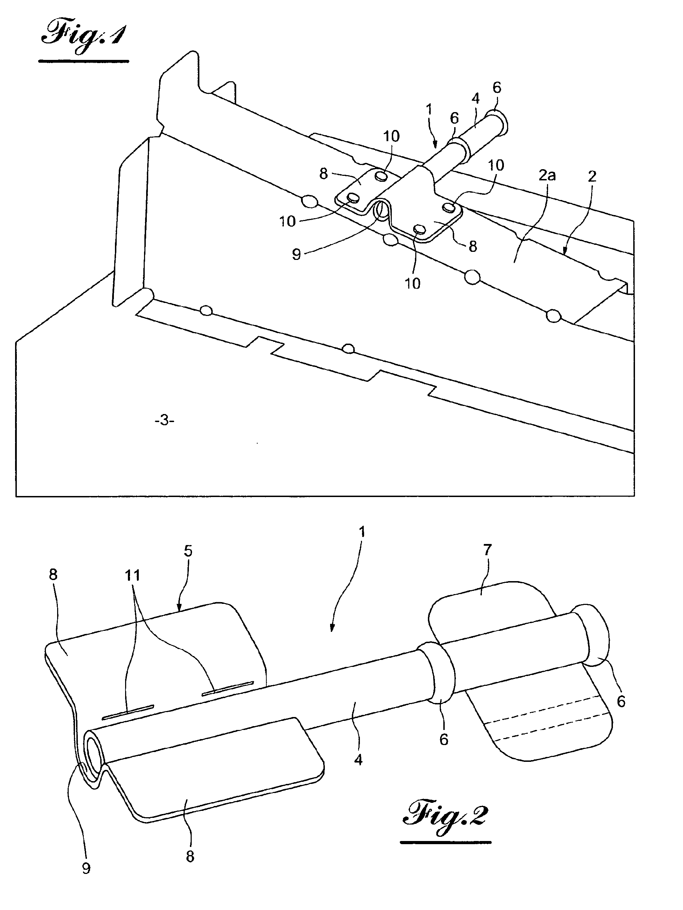

Les figures 1 et 2 représentent un dispositif connu de fixation d'échappement de véhicule automobile et comprenant un support 1 de l'échappement, non représenté, du moteur du véhicule et fixé par soudage à un longeron arrière droit ou gauche 2 supportant le plancher arrière 3 du véhicule.

Le support d'échappement 1 comprend un fil de support rigide 4 constitué dans le cas présent par un tube métallique sensiblement cylindrique, et une pièce rigide métallique 5 solidaire d'une extrémité du tube 4 et fixée par soudage au longeron 2. L'extrémité opposée du tube 4 comporte deux butées annulaires axialement espacées 6.

Un filtre amortisseur de vibrations 7, par exemple en matériau élastomère, est emmanché sur le tube 4 entre les deux butées annulaires 6 afin d'être solidarisé en translation à l'extrémité correspondante du tube de support 4. L'échappement du véhicule est suspendu au filtre amortisseur 7 de façon connue en soi.

La pièce de fixation 5 du support d'échappement 1 comprend deux ailes planes 8 s'étendant de part et d'autre du tube 4 en étant situées dans un même plan parallèle à la direction longitudinale du tube 4 qui s'étend sensiblement perpendiculairement à la direction longitudinale du véhicule.

Entre les deux ailes 8 est réalisée une rainure 9 à section transversale approximativement semi-circulaire recevant l'extrémité conjuguée du tube 4 opposée à celle comportant les deux butées annulaires 6. La profondeur de la rainure 9 peut être déterminée de façon que la face externe du tube 4 affleure les faces situées du même côté des deux ailes 8 ou dépasse légèrement de ces faces, de sorte que lorsque les faces des ailes 8 sont fixées en appui sur la paroi plane inférieure 2a du longeron, l'extrémité correspondante du tube 4 est en appui sur la paroi 2a.

Les deux ailes 8 du support d'échappement 1 sont fixées sur la paroi 2a du longeron 2 par quatre points de soudure 10.

L'extrémité du tube 4 opposée à celle comportant les deux butées annulaires 6 est fixée dans la rainure 9 de la pièce de fixation 5 par au moins deux cordons de soudure 11 réalisés de part et d'autre du tube 4. La figure 2 montre que le tube 4 est fixé dans la rainure 9 par quatre cordons de soudure 11 dont deux seulement situés d'un même côté du tube 4 sont représentés.

La fixation par soudure de la pièce 5 aux ailes 8 du tube 4 nécessite des opérateurs et des robots de soudage grèvant les coûts de fabrication et diminuant la cadence de fabrication. En outre, ce mode de soudage peut provoquer des dispersions de forme du support d'échappement 1.

On connaît également par le document FR 2 870 790 un support d'échappement de véhicule automobile comprenant un fil de support métallique dont une extrémité inférieure est reliée à l'échappement du véhicule et l'extrémité supérieure est solidarisée par soudage dans une rainure conjuguée formée dans une pièce de fixation métallique solidaire d'un longeron supportant un plancher de véhicule 1.

Cependant, ce support d'échappement connu souffre des mêmes inconvénients que le support d'échappement du dispositif de fixation des figures 1 et 2 puisque l'extrémité supérieure du fil du support métallique est également fixée par soudage dans la rainure de la pièce de fixation métallique correspondante. DE 202007009071U décrit un support selon le préambule de la revendication 1.

La présente invention a pour but de pallier les inconvénients ci-dessus des supports d'échappement connus.

A cet effet, l'invention propose un support d'échappement de véhicule notamment automobile, comprenant un fil de support rigide dont une extrémité est destinée à être reliée à l'échappement du véhicule, et une pièce rigide de fixation solidaire de l'extrémité opposée du fil de support suivant l'axe de ce dernier, la pièce de fixation comportant de part et d'autre du fil deux ailes s'étendant dans un même plan pour permettre leur fixation sur une paroi située sous le plancher du véhicule, l'ensemble constitué par la pièce de fixation et le fil de support étant monobloc, caractérisé en ce que

le fil de support comprend un tube fendu longitudinalement et la pièce de fixation comprend une rainure située entre les deux ailes de la pièce de fixation en prolongement du tube fendu et en étant ouverte du même côté que la fente du tube.

Avantageusement, les deux ailes et les deux bords parallèles de la rainure raccordés respectivement aux deux ailes de la pièce de fixation sont situés sensiblement dans le même plan que celui contenant les deux bords parallèles délimitant la fente du tube.

Le tube fendu comprend deux butées annulaires axialement espacées entre lesquelles peut être solidarisé en translation un filtre amortisseur de vibrations.

L'ensemble monobloc est avantageusement réalisé par emboutissage.

Cet ensemble monobloc peut être fixé par soudage des ailes de la pièce de fixation à la partie arrière d'un longeron supportant le plancher du véhicule.

L'invention vise également un véhicule notamment automobile, comprenant un longeron supportant un plancher et un dispositif de fixation d'un échappement du véhicule, lequel dispositif comprend un filtre amortisseur de vibrations et un support d'échappement comprenant un fil de support de l'échappement par l'intermédiaire du filtre amortisseur emmanché sur le fil du support, et qui est caractérisé en ce que le support d'échappement est tel que défini précédemment.

L'ensemble monobloc est fixé par soudage des ailes de la pièce de fixation au longeron du véhicule, en partie arrière de ce dernier.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue partielle en perspective de la partie arrière d'un longeron de support de plancher d'un véhicule et qui est pourvu d'un support d'échappement de l'art antérieur ;
- la figure 2 est une vue en perspective du support d'échappement de la figure 1 ;
- la figure 3 est une vue partielle en perspective de la partie arrière d'un longeron de support de plancher d'un véhicule et pourvu d'un support d'échappement conforme à l'invention ; et
- la figure 4 est une vue en perspective du support d'échappement de la figure 3.

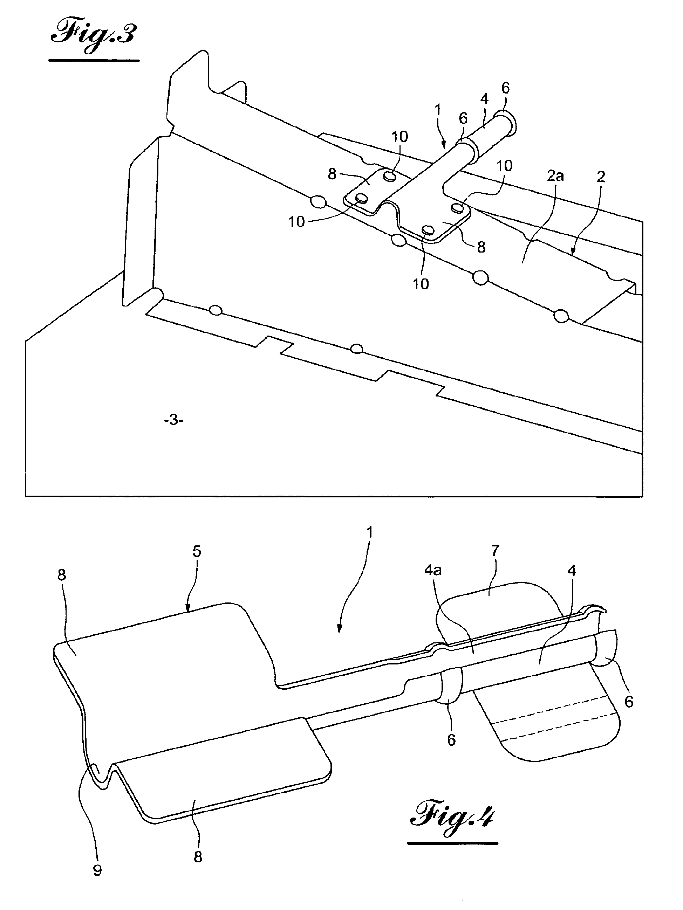

Le dispositif de fixation d'un échappement de véhicule automobile qui va être décrit en référence aux figures 3 et 4 comporte des composants ou éléments communs identiques ou accomplissant la même fonction que ceux du dispositif de fixation de l'art antérieur décrit aux figures 1 et 2. Par conséquent, ces composants ou éléments communs portent les mêmes références.

En se reportant aux figures 3 et 4, le dispositif de fixation d'un échappement de véhicule automobile comprend un support d'échappement 1 solidaire de la paroi plane inférieure 2a de la partie arrière d'un longeron 2 supportant le plancher arrière 3 du véhicule. La partie arrière du longeron 2 peut être située à gauche ou à droite du véhicule suivant que l'échappement, non représenté, se trouve à gauche ou à droite du véhicule en arrière de celui-ci.

Le support d'échappement 1 de l'invention comprend un fil de support rigide constitué par un tube 4 fendu longitudinalement d'un bout à l'autre du tube. Le tube 4 comporte à l'une de ses extrémités deux butées annulaires 6 axialement espacées et entre lesquelles peut être emmanché et immobilisé en translation un filtre amortisseur de vibrations 7. A ce filtre amortisseur 7 est suspendu l'échappement du véhicule. La fente 4a du tube 4 est relativement étroite tout au moins sur une portion de longueur du tube 4 située entre les deux butées annulaires 6 et s'élargit en s'évasant sur sa portion d'extrémité opposée à celle comportant les deux butées annulaires 6.

Le support d'échappement 1 comprend également une pièce rigide de fixation 5 solidaire de l'extrémité du tube 4 opposée à celle supportant l'échappement et suivant l'axe longitudinal du tube 4.

La pièce de fixation 5 comporte deux ailes 8 s'étendant dans un même plan de part et d'autre du tube fendu 4 symétriquement au plan médian longitudinal de ce tube. La pièce de fixation 5 comprend en outre une rainure 9 située entre les deux ailes 8 en prolongement du tube 4, la rainure 9 étant ouverte du même côté que la fente longitudinale 4a.

L'ensemble constitué par la pièce de fixation 5 à ailes 8 et rainure 9 et le tube de support 4 est monobloc et, de préférence, est réalisé par emboutissage d'un flan métallique.

Ainsi, comme cela ressort mieux de la figure 3, la paroi arquée à section transversale sensiblement en forme de U définissant la rainure 9 de la pièce de fixation 5 est dans le prolongement en une seule pièce avec la paroi arquée sensiblement circulaire du tube fendu 4, la rainure 9 et la fente 4a du tube 4 étant en prolongement l'une de l'autre et siuées symétriquement au plan médian longitudinal de ce tube.

Les deux ailes 8 de la pièce de fixation 5 et les deux bords parallèles de la rainure 9 se raccordant respectivement aux deux ailes 8 sont situés sensiblement dans le même plan que celui contenant les deux bords parallèles délimitant la fente 4a du tube 4.

Le support d'échappement 1 est fixé à la paroi inférieure 2a du longeron 2 par soudage des deux ailes 8 de la pièce de fixation 5, notamment par quatre points de soudure 10, de façon que le tube de support de l'échappement 4 s'étende suivant une direction sensiblement transversale à la direction longitudinale du véhicule.

La réalisation en une seule pièce de l'ensemble constitué par le tube de support 4 et la pièce de fixation 5 du support d'échappement 1 permet de diminuer les coûts de fabrication puisqu'il n'est plus nécessaire de prévoir des opérateurs et des robots de guidage coûteux pour réaliser des supports d'échappement de l'art antérieur et augmente la fiabilité de ce support d'échappement puisqu'il n'est plus nécessaire de prévoir des cordons de soudure de liaison du tube de support et de la pièce de fixation de l'art antérieur tendant à fragiliser le support.

## Revendications

1. Support d'échappement (1) de véhicule notamment automobile, comprenant un fil de support rigide (4) dont une extrémité est destinée à être reliée à l'échappement du véhicule, et une pièce rigide de fixation (5) solidaire de l'extrémité opposée du fil de support (4) suivant l'axe de ce dernier, la pièce de fixation (5) comportant de part et d'autre du fil (4) deux ailes (8) s'étendant dans un même plan pour permettre leur fixation sur une paroi (2a) située sous le plancher (3) du véhicule, l'ensemble constitué par la pièce de fixation (5) et le fil de support (4) étant monobloc, **caractérisé en ce que** le fil de support comprend un tube (4) fendu longitudinalement et la pièce de fixation (5) comprend une rainure (9) située entre les deux ailes (8) de la pièce de fixation (5) en prolongement du tube fendu (4) et en étant ouverte du même côté que la fente (4a) du tube (4).

2. Support selon la revendication 1, **caractérisé en ce que** les deux ailes (8) et les deux bords parallèles de la rainure (9) raccordés respectivement aux deux ailes (8) de la pièce de fixation (5) sont situés sensiblement dans le même plan que celui contenant les deux bords parallèles délimitant la fente (4a) du tube (4).

3. Support selon la revendication 1 ou 2, **caractérisé en ce que** le tube fendu (4) comprend deux butées annulaires axialement espacées (6) entre lesquelles peut être solidarisé en translation un filtre amortisseur de vibrations (7).

4. Support selon l'une des revendications précédentes, **caractérisé en ce que** l'ensemble monobloc est réalisé par emboutissage.

5. Support selon l'une des revendications précédentes, **caractérisé en ce que** l'ensemble monobloc peut être fixé par soudage des ailes (8) de la pièce de fixation (5) à la partie arrière d'un longeron (2) supportant le plancher (3) du véhicule.

6. Véhicule notamment automobile, comprenant un longeron (2) supportant un plancher (3) et un dispositif de fixation d'un échappement du véhicule, lequel dispositif comprend un filtre amortisseur de vibrations (7) et un support d'échappement (1) comprenant un fil (4) de support de l'échappement par l'intermédiaire du filtre amortisseur (7) emmanché sur le fil de support (4), **caractérisé en ce que** le support d'échappement (1) est tel que défini dans l'une quelconque des revendications 1 à 5.

7. Véhicule selon la revendication 6, **caractérisé en ce que** l'ensemble monobloc est fixé par soudage des ailes (8) de la pièce de fixation (5) au longeron (2) du véhicule, en partie arrière de ce dernier.

## Claims

1. Exhaust support (1) for a vehicle, in particular an automobile, comprising a rigid support cord (4), one end of which is intended to be connected to the exhaust of the vehicle, and a rigid fixing piece (5) integral with the opposite end of the support cord (4) following the axis of the latter, the fixing piece (5) comprising on either side of the cord (4) two wings (8) extending in the same plane to allow them to be fixed on a wall (2a) situated beneath the floor (3) of the vehicle, the assembly constituted by the fixing piece (5) and the support cord (4) being in one piece, **characterized in that** the support cord comprises a longitudinally split tube (4) and the fixing piece (5) comprises a groove (9) situated between the two wings (8) of the fixing piece (5) in extension of the split tube (4) and being open on the same side as the slit (4a) of the tube (4).

2. Support according to Claim 1, **characterized in that** the two wings (8) and the two parallel edges of the groove (9) connected respectively to the two wings (8) of the fixing piece (5) are situated substantially in the same plane as that containing the two parallel edges delimiting the slit (4a) of the tube (4).

3. Support according to Claim 1 or 2, **characterized in that** the split tube (4) comprises two axially spaced annular stops (6), between which a vibration-damping filter (7) can be secured in translation.

4. Support according to one of the preceding claims, **characterized in that** the one-piece assembly is realized by stamping.

5. Support according to one of the preceding claims, **characterized in that** the one-piece assembly can be fixed by welding of the wings (8) of the fixing piece (5) to the rear part of a side member (2) supporting the floor (3) of the vehicle.

6. Vehicle, in particular an automobile, comprising a side member (2) supporting a floor (3) and a fixing device of an exhaust of the vehicle, which device comprises a vibration-damping filter (7) and an exhaust support (1) comprising a support cord (4) of the exhaust by means of the damping filter (7) mounted on the support cord (4), **characterized in that** the exhaust support (1) is as defined in any one of Claims 1 to 5.

7. Vehicle according to Claim 6, **characterized in that** the one-piece assembly is fixed by welding of the wings (8) of the fixing piece (5) to the side member (2) of the vehicle, in the rear part of the latter.

## Patentansprüche

1. Fahrzeug-Auspuffträger (1), insbesondere für ein Kraftfahrzeug, der einen starren Tragstab (4) aufweist, von dem ein Ende dazu bestimmt ist, mit dem Auspuff des Fahrzeugs verbunden zu werden, und einen starren Befestigungsteil (5), der fest mit dem entgegen gesetzten Ende des Tragstabs (4) entlang der Achse dieses Letzteren verbunden ist, wobei der Befestigungsteil (5) auf jeder Seite des Stabs (4) zwei Flügel (8) trägt, die sich in einer gleichen Ebene erstrecken, um ihre Befestigung an einer Wand (2a), die sich unter dem Fußboden (3) des Fahrzeugs befindet, zu erlauben, wobei die Einheit, die aus dem Befestigungsteil (5) und dem Tragstab (4) besteht, einstückig ist, **dadurch gekennzeichnet, dass** der Tragstab ein längs gespaltetes Rohr (4) aufweist, und dass der Befestigungsteil (5) eine Rille (9) aufweist, die sich zwischen den zwei Flügeln (8) des Befestigungsteils (5) in der Verlängerung des gespalteten Rohrs (4) befindet und auf der gleichen Seite offen ist wie der Schlitz (4a) des Rohrs (4).

2. Träger nach Anspruch 1, **dadurch gekennzeichnet, dass** die zwei Flügel (8) und die zwei parallelen Ränder der Rille (9) die jeweils mit den zwei Flügeln (8) des Befestigungsteils (5) verbunden sind, im Wesentlichen in der gleichen Ebene liegen wie die, die die zwei parallelen Ränder, die den Schlitz (4a) des Rohrs (4) begrenzen, enthält.

3. Träger nach Anspruch 1 oder 2, **dadurch gekennzeichnet, dass** das gespaltete Rohr (4) zwei axial beabstandete ringförmige Anschläge (6) aufweist, zwischen welchen ein Schwingungsdämpffilter (7) in Verschiebung fest verbunden sein kann.

4. Träger nach einem der vorhergehenden Ansprüche, **dadurch gekennzeichnet, dass** die einstückige Einheit durch Stanzen erzielt wird.

5. Träger nach einem der vorhergehenden Ansprüche, **dadurch gekennzeichnet, dass** die einstückige Einheit durch Schweißen der Flügel (8) des Befestigungsteils (5) an den hinteren Teil eines Längsbalkens (2), der den Fußboden (3) des Fahrzeugs trägt, befestigt werden kann.

6. Fahrzeug, insbesondere Kraftfahrzeug, das einen Längsbalken (2) aufweist, der einen Fußboden (3), und eine Befestigungsvorrichtung für einen Auspuff des Fahrzeugs trägt, wobei die Vorrichtung ein Schwingungsdämpffilter (7) und einen Auspuffträger (1) aufweist, der einen Stab (4) zum Tragen des Auspuffs über das Dämpffilter (7), das auf den Tragstab (4) aufgeschrumpft ist, aufweist, **dadurch gekennzeichnet, dass** der Auspuffträger (1) wie in einem der Ansprüche 1 bis 5 definiert ist.

7. Fahrzeug nach Anspruch 6, **dadurch gekennzeichnet, dass** die einstückige Einheit durch Schweißen der Flügel (8) des Befestigungsteils (5) an den Längsbalken (2) des Fahrzeugs, im hinteren Teil dieses Letzteren befestigt ist.
